# EUROPEAN PATENT SPECIFICATION

(11) **EP 1 575 855 B1**
(45) Date of publication and mention of the grant of the patent: **05.09.2007**
(21) Application number: 03780192.5
(22) Date of filing: 17.12.2003
(51) Int. Cl.: B65G 47/74, B30B 13/00, B65B 1/24

(54) **METHOD AND APPARATUS FOR PRODUCING FODDER PORTIONS AND A FODDER PORTION PACKAGE**
VERFAHREN UND VORRICHTUNG ZUR HERSTELLUNG VON FUTTERRATIONEN UND VERPACKUNG FÜR FUTTERRATIONEN
PROCEDE ET DISPOSITIF SERVANT A PRODUIRE DES PORTIONS DE FOURRAGE ET CONDITIONNEMENT DE PORTION DE FOURRAGE

(30) Priority: 17.12.2002 FI 20022206
(43) Date of publication of application: 21.09.2005
(73) Proprietor: Raatikainen, Eero, FIN-74300 Sankajärvi (FI)
(72) Inventor: Raatikainen, Eero, FIN-74300 Sankajärvi (FI)
(74) Representative: Pitkänen, Hannu Alpo Antero
(86) International application number: PCT/FI2003/000958
(87) International publication number: WO 2004/054906

(56) References cited:
- DE-A1- 3 738 156
- US-A- 5 010 809
- US-A- 5 689 941

## Description

The present invention relates to a method for producing fodder portions, in which method fodder is unpacked from a fodder bale with an unpacking device for a fodder bale, unpacked fodder is prepressed with a prepressing device mainly into a solid fodder bar, the fodder bar is cut with a cutting device into fodder portions of suitable size and the weight of fodder portions is measured with a weighing machine located after the cutting device and on grounds of the weighing results from the weighing machine the weight and/or the size of fodder portions is automatically regulated. The present invention also relates to an apparatus for producing of fodder portions, which apparatus consists of an unpacking device for unpacking of fodder bales, prepressing device for prepressing of unpacked fodder into a continuous fodder bar, a cutting device for cutting of a fodder bar into fodder portions and a weighing machine for weighing of cut fodder portions as well as a control device for controlling a cutting device and devices before that as well as for regulating the weight of fodder portions automatically on grounds of weighing results from the weighing machine. In addition, the present invention relates to a Fodder portion package, which consists of several fodder portions attached with at least one binding element, in which fodder portions in a fodder portion package, have been produced by unpacking fodder from fodder bales with an unpacking device, by prepressing the unpacked fodder into a fodder bar with a prepressing device and by cutting a fodder bar with a cutting device into fodder portions with predetermined weight.

The basis of feeding a horse is good hay and/or straw. Traditionally oat is used additionally. In addition, various kind of industrial fodder is growing its share year after year. In terms of welfare of a horse, it is important that these nutritive substances suitable for a horse be fed in suitable amounts in suitable proportions. Especially, this is important while racehorses are concerned, since the amount of nutrition as well as the energy and nutritive substance content of nutrition play an important role in the performance of a horse. The regulation of the amount of hay and other different kind of straw fodder (in this application fodder) is very difficult while employing present dosing methods, while, for example, density of loose fodder unpacked from a fodder bale (the amount of solid material) varies quite a lot, due to which estimation of amount by visual estimate only leads to great variations in the amount of nutrition in a fodder portion in which case fodder is also wasted. In order to eliminate these problems the amount of fodder fed to a horse has been tried to measure by weighing every fodder portion given to a horse. In this way somewhat better results than what was described in the previous method have been achieved, but it is clear that weighing of every fodder portion before feeding is troublesome and slow because the mere unpacking of a fodder bale in a controlled way by using present methods such that unpacked amounts would form suitable portions for one feeding time, is cumbersome.

For facilitating the unpacking of fodder bales and for eliminating previously mentioned problems, various kinds of unpacking devices of fodder bales have been developed. Some of them include devices, by means of which, out of one fodder bale pieces consisting smaller amounts of fodder than in the original fodder bales can be produced, handling of which smaller pieces is easier than that of loose fodder and which may, such as they are, be used as fodder portions to be fed to animals. Weight of these kinds of fodder portions varies and fodder portions produced in this way must be weighed in case the amount of energy and nutritive substances of the fodder they include is desired to be estimated.

The object of the invention is to provide a method, by employing of which the previously mentioned problems are eliminated. Especially, the object of the invention is to provide a method, by employing of which it is possible to produce fodder portions of defined weight and/or size as well as to pack fodder portions formed in that way into fodder portions with predetermined weight which can be stored in small space and which are easy to unpack. In addition, the object of the invention is to provide an apparatus suitable for producing of these kinds of fodder portions and fodder portion packages formed in that way, which is efficient and simple, and with which it is possible to produce fodder portions and fodder portions packages formed of those quickly and with ease. Furthermore, the object of the invention is to provide a fodder portion package for making it easier to handle and store fodder portions produced in accordance with the method, in which fodder portions package the fodder portions may be stored in such a form, which takes little space but from which they are easily detached from each other into fodder portions of the original size and by means of which it is possible to minimize the amount of fodder wasted.

The object of the invention is accomplished by a method, apparatus and fodder potion package, the characteristics of which are presented in the claims.

Characteristic to the method in accordance with the invention is the fact, that two or more fodder portions are placed into a bundle press one on top of the other and/or adjacent, and that fodder portions placed one on top of the other and/or adjacent are pressed with a bundle press into fodder portions bundles. In this way, it is possible to have several fodder portions in a form taking only a little space such that separate fodder portions may, however, be detached from each other in original size while unpacking the fodder portion bundle. In addition, while unpacking a package/bundle it is possible to have fodder portions packed in this way to be of predetermined weight and/or size. Therefore, while feeding a horse (or some other animal) with these kinds of fodder portions it is possible to be aware of the amount of energy and nutrition the horse is getting without laborious and slow weighing of each fodder portion. Therefore, while employing this kind of method it is possible to eliminate the previously mentioned problems related to feeding of a horse and estimating the amount of nutrition.

In an advantageous application of the method in accordance with the invention, the weight of a fodder portion bundle is measured after a bundle press with a weighing machine and on grounds of the results, the target weight of fodder portions regulated on grounds of the results from the weighting machine before the bundle press is corrected. In case the weight of an uncut fodder bar is measured while defining of the size of a fodder portion, there appears a systematic error in the result due to motion of a fodder bar, which error may, in this way, be corrected. Due to this, the weight of a fodder portion may be regulated exactly to the desired target value.

In an additional advantageous application of the method in accordance with the invention, a fodder portion bundle is bound into a fodder portion package with a binding device. A bound fodder portion bundle forms a fodder portion package, which may be moved from one place to another and from which fodder portions of certain weight may easily be separated by opening the binds of the package. When a fodder portion is tightly pressed mere binding is enough, in case fodder portion packages are not transported or kept outdoors.

In an advantageous application of the method in accordance with the invention, a fodder portion package is packed into package material with a packing machine. In this way a fodder portion package may be formed tight and unspreading as well as is kept away from moisture and rain during transportation or while storing outdoors.

Characteristic to the apparatus in accordance with the invention is the fact that the apparatus comprises a bundle press in order to place two or more fodder portions one on top of the other and/or adjacent and to press into fodder portions bundles.

By means of this kind of apparatus it is possible to produce fodder portions in accordance with the method in accordance with the invention, which fodder portions are of certain weight and/or of certain size, and which may be separated from a fodder portions bundle/package of Several fodder portions having the size of the original fodder portions while unpacking a fodder portion bundle/package. Therefore, while feeding, for example, a horse with fodder portions produced with this kind of apparatus it is easy to define the amount of energy and nutritive substances in the fed fodder.

Characteristic to a fodder portion package in accordance with the invention is the fact, that in between separate fodder portions there is a detaching area for making it easier to detach fodder portions from each other, and that the detaching area has been formed by pressing two or more fodder portions placed one on top of the other and/or adjacent against each other with a bundle press. A fodder portion package produced in this way keeps well together and fodder is well being kept and transported in a form demanding only a little space. In addition, due to detaching areas being included in this kind of fodder portion package fodder portions are easy to be detached from the package in their original size. While the size of a fodder portion is previously known the amount of energy and nutritive substances fed to an animal may simply and quickly be defined without weighing each fodder portion. This saves time and working costs related to feeding, for example.

Next, the invention will be explained in more detail with reference to the accompanying drawing, in which an apparatus in accordance with the method in accordance with invention is presented.

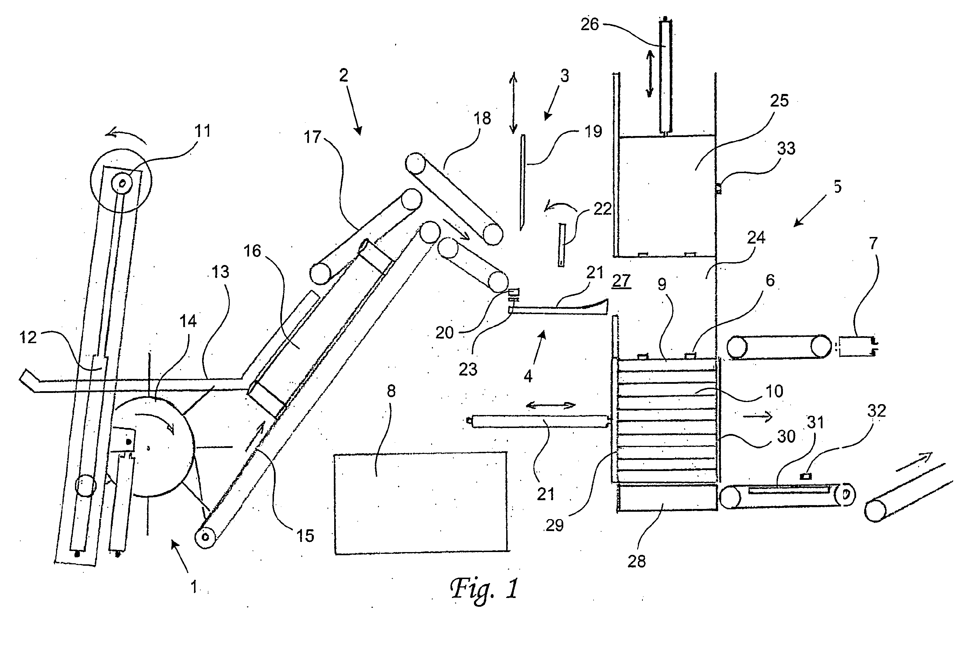

Figure 1 illustrates an apparatus in accordance with the invention, which comprises an unpacking device 1, a prepress 2, a cutting device 3, a weighing machine 4, a bundle press 5, a binding device 6 and a packing device 7. These devices have been connected to each other in accordance with figure 1 such that they form a manufacturing process, by means of which fodder from a round bale may be formed into fodder portions of desired target weight and/or size as well as pack fodder portions produced in this way into fodder portion packages which demand little space and are easy to be unpacked. For controlling the manufacturing process, the apparatus includes, apart from devices 1-7, also a controlling centre 8 and necessary previously recognized connections, with which the controlling centre is connected to devices 1-7. In the application in accordance with figure 1 the devices of the apparatus have hydraulic and/or pneumatic drives. Therefore, the controlling centre 8 includes a hydraulic pump with an electric motor and pneumatic device for creating pressure for hydraulic and pneumatic drives. In addition, the controlling centre includes a programmable electronic central unit for controlling the controlling devices of drives, such as hydraulic and pneumatic valves such, that it is possible to make the apparatus function fully automatically.

The unpacking device 1 consists of a rotating device 11 with a hydraulic motor for a round bale, lifting and narrowing devices 12, beams of the bottom grating 13 and a feeding reel 14 placed under these, which reel is run with its own hydraulic motor to the opposite direction with regard to the running direction of the rotating device of a round bale. The rotating speed of the rotating device and the feeding reel may be steplessly adjusted. By means of these devices, fodder on a round bale is unpacked from a round bale and directed to a conveyor belt of a prepress.

The prepress 2 has been formed of a conveyor belt 15, tightening belts 16 and flattening belts 17 and 18, the speed of which is also steplessly adjustable. The prepress 2 presses the fodder unpacked by the unpacking device 1 into uniform, in this case square by cross-section fodder bar, and moves it to the cutting device 3, with which the fodder bar is cut continuously into fodder portions of desired target weight and/or size.

The cutting device 3 is a guillotine-type cutting device of recognized construction, in this case, which includes a cutting blade 19 to be moved with vertical reciprocating motion and a counter blade 20 placed under it. While the fodder bar from the prepress 2 has pushed pass the cutting device to the weighing machine 4 so long that there is a target weight amount of fodder bar on the weighing machine, the cutting blade 19 is moved downwards to the side of the counter blade 20. As a result, fodder bar is cut and a fodder portion of desired target weight stays on the weighing machine 4.

The weighing machine 4 consists of a weighing plate 21, which has been connected to an electronic weighing device (not illustrated in figure), from which the measuring data is transmitted to the central unit of the controlling centre 8, which central unit gives a cutting command to the fodder bar, when there is the target weight amount of fodder bar on the weighing machine. The weighing machine 4 includes also a clearing scraper 22, with which the fodder portion package on the weighing plate 21 is moved forward to the bundle press 5, which is placed after the weighing machine. In addition, the weighing machine 4 includes a pneumatic clearing device 23, which cleans the weighing plate 21 from any possible separate parts of fodder fallen from a fodder portion and other litter simultaneously with the clearing scraper.

The bundle press 5 has been formed of a pressing chamber 24 of square cross-section, with a pressing piston 25 mounted inside, which piston moves with reciprocating motion by a hydraulic cylinder 26. There is an opening 27 in the pressing chamber 24 at the point of the weighing plate of the weighing machine 4, therefore the fodder portion taken off from the weighing plate by the clearing scraper 22 falls to the bottom 28 (or on already fallen fodder portions) of the pressing chamber 24. The clearing scraper 22 performs the emptying process of the weighing machine while the pressing piston 25 is on the upper position. The pressing piston of the pressing chamber always performs the pressing motion while a new fodder portion has been added to the pressing chamber. The bottom 28 of the pressing chamber is movable in the direction of motion of the pressing piston and two opposite walls of the chamber have been diagonally serrated. The bottom is moved such that the pressing piston presses each fodder portion somewhat equally. After pressing the fodder portions of the same fodder portion bundle have been pressed more tightly than after prepressing stage such that fodder portions are placed tightly one against the other but between separate fodder portions there is a more loose space than the inner parts of fodder portions, so-called detaching area 10. In addition, the pressing chamber includes a portion counter 33 for counting the number of fodder portions to be pressed.

The binding device 6 has been mounted, in this application, inside the pressing chamber 24 of the bundle press 5. Fodder portions, piled one on top of the other and pressed into fodder portion bundles by a binding device are bound with binding elements into a fodder portion package to be handled as one unit. In this application, a binding band or cord made of plastic and reinforced with fibreglass act as binding elements. The bundle press 5 includes also a clearing plate 29 placed in the lower part of the pressing chamber 24 as illustrated in figure 1 and opposite to the clearing plate there is an openable wall 30. By means of these, a finished fodder portion package is moved forward to the weighing machine 31 and the packing device 7 next in line.

The weighing machine 31 is an electronic measuring device of weight resembling in function principle the weighing machine 4, the data from which is transmitted to the central unit of the controlling centre 8, which defines the average weight of a separate fodder portion on grounds of the weight of a fodder portion package. This information is utilized while regulating the target weight of a fodder portion bar to be cut such, that the weight of a fodder portion 9 thus being cut would be as close as possible to the value planned in advance. In this case, the packing device 7 is a recognized wrapping machine (so-called wrapping machine with stretching wrap) by construction with which it is possible to wrap plastic or some other suitable material that is possible to be wrapped with the machine around the fodder portion package. The packing device includes also a fodder portion package counter 32 connected to the central unit for counting the number of ready fodder portion packages.

While mounting a round bale to a unpacking device included in the apparatus in accordance with figure 1 the rotating device 11 of a fodder bale is turned behind the beams of bottom gratins 13 with a turning cylinder placed in it and it is spread with the lifting and spreading device 12 such that the round bale is placed between attaching plates of round bales which are included in the lifting and spreading device. Next, the lifting and spreading device 12 of the rotating device 1 is narrowed such that the round bale is pressed and attached between the attaching plates. After this the rotating device is turned back to the position in accordance with figure 1 above the beams of bottom gratings such, that the outer surface of the round bale is near the beams of bottom gratings for starting the unpacking by means of the feeding reel 14.

While producing fodder portions and fodder portion packages made of them the round bale is rotated with the rotating device 11 of the unpacking device 1 to the direction in accordance with figure 1 and the feeding reel 14 is started at the same time. The spikes of the feeding reel loose a layer of fodder from the round bale and direct it to the conveyer belt 15 of the prepress 2, which belt is moved to the direction of tightening belts 16. The thickness of the fodder layer may be regulated by moving the round bale vertically on the lifting device of the unpacking device. While unpacking proceeds the round bale is automatically lowed such that the thickness of the fodder to be unpacked stays approximately the same. Conveyer belt 15 transports fodder between the tightening belts 16 and the flattening belts 17 and 18. In this case, fodder is pressed into a fodder bar with square cross-section. While desired, it is also possible to employ loose fodder for producing a fodder bar. In this case, fodder is being fed straight to the conveyer belt 15 of the prepress on or in front of the feeding reel 14. After the prepress 2 the fodder bar pushes between the cutting blade 19 and the counter blade 20 of the cutting device 3 to the weighing plate 21 of the weighing machine 4. While the weight of a fodder bar on the weighing plate reaches the previously defined target weight, the cutting blade 19 of the cutting device makes a cutting motion, and from a fodder bar the first fodder portion 9 is cut. After this, the scraping plate 22 of the weighing machine scrapes a fodder portion to the pressing chamber 24 of the bundle press. The pneumatic clearing device 23 of the weighing machine blows the weighing plate clean. Next, the pressing piston 25 of the pressing chamber 24 presses a fodder portion against the adjustable bottom of the pressing chamber moved to the suitable point. While pressing, the fodder portions to be pressed are counted with a portion counter 33 included in the pressing chamber, which counter has been connected to the central unit. At the same time, a new fodder bar appears on the weighing machine 4, which is being cut, while the target weight has been reached. The second fodder portion coming to the bundle press is pressed against the former fodder portion in the bottom of the pressing chamber and the following fodder portions against the former. In this way, there will be a fodder portion bundle in the bundle press, which is, at the end, being bound with a binding device 6, which wraps round the fodder portion bundle, in this case, two vertical binding bands or cords. At that time, flattening belts and tightening belts as well as the pressing piston stop while necessary. A bound fodder portion package is transferred to the weighing machine 31, where it is weighed. The measuring data is transmitted to the central unit of the controlling centre 8, which corrects the target weight of the fodder portion in case the average weight of a fodder portion defined from the weight of a fodder portion package differs from the predetermined desired weight of a fodder portion. A bound and weighed fodder portion package is next transported to the packing device 7 through a package counter 32 by a clearing plate 29, where it is wrapped with packing material. This phase may be passed in case only binding is necessary and the fodder portion package is not desired to have packing material around. Producing of the next fodder portion bundle may start while the former is still on the weighing machine 31. This is carried out in accordance with what was previously presented.

The method in accordance with the invention may be realized, in many parts, differing from the previously mentioned application. In accordance with the method in accordance with the invention the fodder is unpacked from a fodder bale with an unpacking device for fodder bale, the unpacked fodder is prepressed with a prepress mainly to a solid fodder bar, the fodder bar is cut with a cutting device into fodder portions of suitable size and the weight of fodder portions is measured with a weighing machine located after the cutting device and on ground of the weighing data from the weighing machine the weight and/or the size of fodder portions is regulated automatically. After these phases, two or more fodder portions are placed one on top of the other and/or adjacent, after what fodder portions placed like this are pressed into fodder portion bundles in a bundle press. Further, after these phases fodder portion bundles may, only either be bound or packed, or carry out the both previously mentioned packing measures. Fodder portion bundles may also be left unpacked and unbound in case they are meant to be used immediately.

In addition, the apparatus needed to realize the previously mentioned phases of the method and the fodder portion package produced with it may, in many different ways, be realized differing from the example apparatus illustrated in figure 1. In an application in accordance with figure 1, the bottom of the pressing chamber of the bundle press turns fodder portions one by one to tunnel taking them to the weighing machine, in which tunnel the binding is carried out. This kind of apparatus is functioning constantly. Essential, in order to great a fodder portion package in accordance with the invention is the fact that it is necessary to create such bundles of fodder portions that keep in one piece and which have a detaching area between the fodder portions with more loose fodder parts than in the inner structure of fodder portions such that while unpacking a fodder portion package, separate fodder portions get loose from each other as fodder portions of original size and weight. In addition, it is to be noted that fodder portions must not necessary be square, but they may be, for example, cylindrical, disc-like and that fodder portions in a fodder portion package in accordance with the invention must not necessary be only placed one on top of the other, but they may be placed also adjacent and/or in succession in one fodder portion package. Further, there may be various number of fodder portions in one package depending, for example, on the size of fodder portions, on the type of fodder and on use. A fodder portion package to be transported and/or stored may be only bound with binding elements or both bound and packed into some suitable packing material. In addition, in some application some suitable separating material may be inserted between fodder portions, such as sheets made of paper or thin cardboard, for example. These facilitate further the detachment of separate fodder portions from a fodder portion package.

The invention is not limited to the presented advantageous application but it can vary within the frames of the idea of the invention formed in the claims.

## Claims

1. Method for producing fodder portions, in which method fodder is unpacked from a fodder bale with an unpacking device (1) of a fodder bale, the unpacked fodder is prepressed with a prepress (2) mainly into a solid fodder bar, the fodder bar is cut with a cutting device (3) into fodder portions (9) of suitable size and the weight of fodder portions is weighted with a weighing machine (4) being placed after the cutting device (3) and on grounds of measuring data from the weighing machine (4) the weight and/or the size of fodder portions (9) is regulated automatically, **characterized in that** two or more fodder portions (9) are placed to a bundle press (5) one on top of the other and/or adjacent and that fodder portions (9) being one on top of the other and/or adjacent are pressed with a bundle press (5) into fodder portion bundles.

2. Method in accordance with claim 3, **characterized in that** the weight of a fodder portion bundle is measured with a weighing machine (31) after a bundle press (5) and that on grounds of measuring data the target weight of a fodder portion regulated on the weighing machine (4) before the bundle press is corrected.

3. Method in accordance with claim 3 or 4, **characterized in that** a fodder portion bundle is bound into a fodder portion package with a binding device (6).

4. Method in accordance with claim 5, **characterized in that** a fodder portion package is packed into packing material with a packing device (7).

5. Apparatus for producing fodder portions, which apparatus comprises an unpacking device (1) for unpacking fodder bales, a prepress (2) for prepressing the unpacked fodder into continuous fodder bar, a cutting device (3) for cutting a fodder bar into fodder portions and a weighing machine (4) for weighing the cut fodder portions as well as a controlling device (8) for controlling the cutting device (3) and devices before it and for regulating the weight of a fodder portion (9) on grounds of measuring data from a weighing machine (4) automatically, **characterized in that** the apparatus comprises a bundle press (5) for placing two or more fodder portions (9) one on top of the other and/or adjacent and for pressing them into a fodder portion bundle.

6. Fodder portion package, which comprises several fodder portions attached to each other with at least one binding element, wherein said fodder portions of fodder portion package are produced by unpacking fodder with an unpacking device (1) from fodder bales, by prepressing the fodder with a prepress (2) into a fodder bar, and by cutting the fodder bar with a cutting device (3) into fodder portions (9) of previously defined weight, **characterized in that** between separate fodder portions (9) there is a detaching area (10) for facilitating the loosening of fodder portions from each other and that the detaching area (10) has been realized by pressing two or more fodder portions (9) placed one on top of the other and/or adjacent with a bundle press (5) against each other.

## Patentansprüche

1. Verfahren zur Herstellung von Futterportionen, wobei Futter in einer Entpackungsvorrichtung (1) aus einem Futterballen entpackt wird, das entpackte Futter mit einer Vorpresse (2) im Wesentlichen zu einer festen Futterstange vorgepresst wird, die Futterstange mit einer Schneidvorrichtung (3) in Futterportionen (9) von geeigneter Größe geschnitten und das Gewicht der Futterportionen mit einer hinter der Schneidvorrichtung (3) angeordneten Wiegevorrichtung (4) gewogen wird und das Gewicht und/oder die Größe der Futterportionen auf der Grundlage der Messwerte von der Wiegevorrichtung (4) automatisch geregelt wird, **dadurch gekennzeichnet, dass** zwei oder mehrere Futterportionen (9) an einer Bündelpresse (5) übereinander und/oder nebeneinander platziert werden, und dass die Futterportionen (9) übereinander und/oder nebeneinander in einer Bündelpresse (5) zu Futterportionsbündeln verpresst werden.

2. Verfahren nach Anspruch 3, **dadurch gekennzeichnet, dass** das Gewicht eines Futterportionsbündels mit einer Wiegevorrichtung (31), die hinter einer Bündelpresse (5) angeordnet ist, gemessen wird, und dass auf der Grundlage der Messwerte das Sollgewicht einer Futterportion an der Wiegevorrichtung (4) geregelt wird, bevor die Bündelpresse korrigiert wird.

3. Verfahren nach Anspruch 3 oder 4, **dadurch gekennzeichnet, dass** ein Futterportionsbündel mit einer Abbindevorrichtung (6) zu einer Futterportionspackung abgebunden wird.

4. Verfahren nach Anspruch 5, **dadurch gekennzeichnet, dass** eine Futterportionspackung mit einer Verpackungsvorrichtung (7) in Verpackungsmaterial eingepackt wird.

5. Vorrichtung zur Herstellung von Futterportionen, ausweisend eine Entpackungsvorrichtung (1) zum Entpacken von Futterballen, eine Vorpresse (2) zum Vorpressen der entpackten Futterballen zu einer kontinuierlichen Futterstange, eine Schneidvorrichtung (3) zum Schneiden einer Futterstange in Futterportionen und eine Wiegevorrichtung (4) zum Verwiegen der geschnittenen Futterportionen sowie eine Steuervorrichtung (8) zur Steuerung der Schneidvorrichtung (3) und den dieser vorgeschalteten Vorrichtungen und zur automatischen Regelung des Gewichts einer Futterportion (9) auf der Grundlage der Messwerte von einer Wiegevorrichtung (4), **dadurch gekennzeichnet, dass** die Vorrichtung eine Bündelpresse (5) zur Platzierung von zwei oder mehreren Futterbündeln übereinander und/oder nebeneinander und zum Verpressen dieser zu einem Futterportionsbündel aufweist.

6. Futterportionspackung, aufweisend mehrere, durch mindestens ein Bindeelement aneinander befestigte Futterportionen, wobei die Futterportionen der Futterportionspackung hergestellt werden durch Entpacken von Futter mit einer Entpackungsvorrichtung (1) aus Futterballen, durch Vorpressen des Futters mit einer Vorpresse (2) zu einer Futterstange und durch Schneiden der Futterstange mit einer Schneidvorrichtung (3) in Futterportionen (9) von im voraus festgelegtem Gewicht, **dadurch gekennzeichnet, dass** zwischen separaten Futterportionen (9) ein Abtrennbereich (10) zur Vereinfachung des Lösens von Futterportionen voneinander angeordnet ist, und dass der Abrennbereich (10) **dadurch** erzeugt worden ist, dass zwei oder mehrere, mit einer Bündelpresse (5) übereinander und/oder nebeneinander gepresste Futterportionen (9) gegeneinander platziert werden.

## Revendications

1. Procédé pour produire des portions de fourrage, dans lequel le fourrage est déballé d'une balle de fourrage avec un dispositif de déballage (1) d'une balle de fourrage, le fourrage déballé est pré-pressé avec une prépresse (2) principalement dans une barre de fourrage solide, la barre de fourrage est découpée avec un dispositif de découpage (3) en portions de fourrage (9) de taille adaptée et le poids des portions de fourrage est pesé avec une machine de pesage (4) qui est placée après le dispositif de découpage (3) et sur la base des données de mesure de la machine de pesage (4) le poids et/ou la taille des portions de fourrage (9) sont régulés automatiquement, **caractérisé en ce qu'**au moins deux portions de fourrage (9) sont placées dans une presse de mise en botte (5) l'une sur l'autre et/ou de manière adjacente et **en ce que** les portions de fourrage (9) qui sont l'une sur l'autre et/ou adjacentes sont pressées avec une presse de mise en botte (5) pour faire des bottes de portions de fourrage.

2. Procédé selon la revendication 3, **caractérisé en ce que** le poids d'une botte de portions de fourrage est mesuré avec une machine de pesage (31) après une presse de mise en botte (5) et **en ce que** sur la base des données de mesure le poids cible d'une portion de fourrage est régulé sur la machine de pesage (4) avant que la presse de mise en botte ne soit corrigée.

3. Procédé selon la revendication 3 ou 4, **caractérisé en ce qu'**une botte de portions de fourrage est liée dans un emballage de portions de fourrage avec un dispositif de liaison (6).

4. Procédé selon la revendication 5, **caractérisé en ce qu'**un emballage de portions de fourrage est conditionné dans un matériau de conditionnement avec un dispositif de conditionnement (7).

5. Appareil pour produire des portions de fourrage, ledit appareil comprenant un dispositif de déballage (1) pour déballer des balles de fourrage, une prépresse (2) pour pré-presser le fourrage déballé en barre de fourrage continue, un dispositif de découpage (3) pour découper une barre de fourrage en portions de fourrage et une machine de pesage (4) pour peser les portions de fourrage découpées ainsi qu'un dispositif de commande (8) pour commander le dispositif de découpage (3) et les dispositifs qui le précèdent et pour réguler le poids d'une portion de fourrage (9) sur la base de données de mesure provenant d'une machine de pesage (4) automatiquement, **caractérisé en ce que** l'appareil comprend une presse de mise en botte (5) pour placer au moins deux portions de fourrage (9) l'une sur l'autre et/ou de manière adjacente et pour les presser dans une botte de portions de fourrage.

6. Emballage de portions de fourrage, qui comprend plusieurs portions de fourrage attachées l'une à l'autre avec au moins un élément de liaison, dans lequel lesdites portions de fourrage de l'emballage de portions de fourrage sont produites en déballant le fourrage avec un dispositif de déballage (1) des balles de fourrage, en pré-pressant le fourrage avec une prépresse (2) dans une barre de fourrage, et en découpant la barre de fourrage avec un dispositif de découpage (3) en portions de fourrage (9) d'un poids précédemment défini, **caractérisé en ce que**, entre des portions de fourrage distinctes (9), il y a une zone de détachement (10) pour faciliter le détachement des portions de fourrage l'une de l'autre et **en ce que** la zone de détachement (10) est réalisée en pressant au moins deux portions de fourrage (9) placées l'une sur l'autre et/ou de manière adjacente avec une presse de mise en botte (5) l'une contre l'autre.
